# EUROPEAN PATENT SPECIFICATION

(11) **EP 1 909 069 B1**
(45) Date of publication and mention of the grant of the patent: **08.12.2010**
(21) Application number: 06020734.7
(22) Date of filing: 02.10.2006
(51) Int. Cl.: G01C 21/36, G06Q 10/00, G08G 1/0968

(54) **Intelligent destination setting for navigation systems**
Intelligente Zieleinstellung für Navigationssysteme
Paramétrage de destination intelligent pour systèmes de navigation

(43) Date of publication of application: 09.04.2008
(73) Proprietor: Harman Becker Automotive Systems GmbH, 76307 Karlsbad (DE)
(72) Inventor: Bauer, Lee, Farmington Hills MI 48331 (US); Hennecke, Marcus, 89075 Ulm (DE); Hamerich, Stefan, 89073 Ulm (DE)
(74) Representative: Grünecker, Kinkeldey, Stockmair & Schwanhäusser Anwaltssozietät

(56) References cited:
- EP-A- 1 178 286
- EP-A2- 0 684 592
- WO-A-02/42718
- DE-A1- 10 134 108
- US-A1- 2002 030 698

## Description

### Field of Invention

The present invention relates to vehicle navigation systems. In particular, the invention relates to an automatic input of the destination for route guidance by the navigation system.

### Background of the Invention

The use of navigation systems in vehicles becomes increasingly prevalent. Usually on board navigation computer systems analyze the combined data provided by GPS (Global Positioning System), motion sensors as ABS wheel sensors as well as a digital map and thereby determine the actual position and velocity of a vehicle with increasing preciseness.

Known navigation systems typically use electronic maps to represent cartographic features, as streets, buildings and rivers, and make use of a medium such as a compact disk, a digital video disc or a hard disk to store the data that relates to the cartographic features. After map matching the actual position of the user is indicated in the digital map. By acoustic and/or visualized information the user is guided to the predetermined destination.

The input of the destination, e.g., an address, by a user is still a relatively time-consuming and rather cumbersome process. For example, the user has to scroll through large lists of possible destinations. Even if the navigation system is provided with a speech input, selection of the desired destination is time-consuming due to the need for working through different levels of data organization and also error-prone due to the possibility of faulty speech recognition.

On the other hand, nowadays a great variety of possible destinations are electronically stored in mobile devices as, e.g., smartphones and Personal Digital Assistants (PDA), in form of entries in address books or vCards that are input and stored in the mobile devices. Recently, PDAs have been developed that are provided with navigation function. It possible to connect a PDA operating as a navigation aid with a vehicle information/navigation system and to have the route guidance carried out by the navigation module of the PDA. The multimodal dialog system called SmartKom, for example, addresses the problem of connecting a mobile device to a vehicle navigation system and also to continue route guidance that previously has been carried out by the vehicle navigation system by means of the mobile device.

Such solutions, however, demand for the implementation of navigation software in the mobile devices (e.g., PDAs or smartphones). In particular, the input of the desired destination is not sufficiently facilitated or improved by such recent developments.

Documents US 2002/0030698A1, DE10134108A1, WO 02/42718A1, EP 1178286A2, and EP 0684592 disclose methods for inputting destinations from a mobile organiser to a navigation device.

Therefore, there is a need for a more convenient intelligent input of destinations in vehicle navigation systems.

### Description of the Invention

The above-mentioned drawbacks of the art are solved by the method for entering (inputting) a destination for route guidance in a vehicle navigation system according to claim 1.

If a location stored in the mobile electronic device is selected as the destination, the location is fed into the vehicle navigation system and selected as the destination. Storing a location and feeding it into the vehicle navigation system means storing and feeding/inputting of data related to / identifying a physical location, e.g., the name of an address or geographical coordinates or arbitrary coordinates corresponding to a physical location etc.

The vehicle in which the vehicle navigation system is installed by any motor vehicle, e.g., an automobile, a motorcycle, a boat, an airplane, etc.

The mobile electronic device can, e.g., be a Personal Digital Assistant (PDA) or a smartphone (PDA phone) both comprising a Personal Information Manager including a scheduler module (appointment calendar) and an address book. The mobile electronic device can be an electronic organizer and, in particular, it may be a Palm Top or a BlackBerry. The address book and the scheduler module, which comprises data representing scheduled appointments, may advantageously be synchronized with the vehicle navigation system, i.e. with the corresponding data stored in a database of the navigation system. Synchronization can be achieved by standard synchronization software as, e.g., HotSync or ActiveSync.

The connection between the mobile electronic device and the vehicle navigation system can be performed wirelessly, e.g., via a Bluetooth, an infrared link (as IrDA), Wireless Local Area Network (WLAN) or by wire, e.g., using a USB connection.

The inventive method allows for a simple, reliable and fast input of a destination for route guidance in the vehicle navigation system. No manual input, e.g., by a touch screen or keyboard, and no spelling of a destination name in the case of a navigation system equipped with a speech control are necessary any longer. Moreover, the functionality of some electronic Personal Information Manager can be integrated in the navigation system providing synergetic effects with respect to the scheduling of tasks and guidance to the locations associated with appointments.

If, e.g., an appointment is associated with a location (meeting someone somewhere), the associated location can be fed into the vehicle navigation system. The navigation system can localize an address given by a city name and a street name/number by means of stored geographical data that includes, e.g., geographical coordinates. According to another example, an appointment may be a demand for refueling the vehicle. In this case, the destination selected on the basis of the scheduled appointment can be a gas station the geographic position of which is stored in the navigation system (i.e. a location database of the navigation system). In particular, the gas station of a number of stored gas stations that is closest to the actual position of the vehicle can be selected as a destination for route guidance.

In particular, the scheduled appointment can be associated with a person whose address is stored in the mobile electronic device (e.g., in an electronic address book of a PDA or a smartphone) or the vehicle navigation system and it is this address that can represent the location that is associated with the scheduled appointment. For example, the scheduler module may include an entry indicating an appointment with a particular person. Then, the address may be looked-up by means of a relational database including data relating the name of the person to a vCard (or other kind of data including the address of the respective person) also stored in the mobile electronic device. The data that is necessary for locating the address in a digital map and for calculating a route to the destination are provided by the vehicle navigation system that usually comprises a GPS receiver and a database for storing digital map data.

According to the inventive method it is automatically determined whether a scheduled appointment stored in the scheduler module of the mobile electronic device and associated with a location stored in the mobile electronic device or in the vehicle navigation system is coming up within a predetermined time interval and if it is determined that such a scheduled appointment is coming up within the predetermined time interval, i.e. the appointment is scheduled for some future point of time within some predetermined time range, the associated location is selected as the destination for route guidance.

The predetermined time interval may comprise any point of time in the future. The method may also comprise checking whether there was an appointment scheduled at some time before the connection of the mobile electronic device to the vehicle navigation system has been established and informing the user about such an appointment if it is detected.

Either automatically or on demand by a user in response to a prompt given by the vehicle navigation system the associated location is selected as the destination and/or a route to the destination is calculated.

Thus, it is possible that a destination is automatically chosen without a need for any operation by the user (e.g., the driver of the vehicle). The destination is automatically chosen in response to information about appointments stored in the mobile electronic device which not only assists the driver in entering the next destination for a travel but also in remembering important appointments.

However, it might be preferred to have the navigation system output a prompt, e.g., a synthetic speech output or a text display on a display device asking for acknowledgement of the selected destination as well as calculation of a route to the selected destination. In this case calculation of a route the user might not be interested in can be avoided and he can faster initiate route calculation to an alternative destination. If more than one scheduled appointment is found within the predetermined time interval, the user may particularly skip the temporarily next appointment to have, e.g., a location associated with the following appointment selected as the destination for route guidance.

In one embodiment a location stored in the mobile electronic device or a location stored in the vehicle navigation system is selected as the destination for route guidance based on the at least one scheduled appointment in response to a speech input by a user. In this case, the address book and the scheduler module of the mobile electronic device may preferably be synchronized with the vehicle navigation system, i.e. with the corresponding data stored in a database of the navigation system, and the user may initiate selection of a destination for route guidance by a verbal command. Automatic entering of an appropriate destination and/or calculation of a route to the destination can, thus, be carried out when a user is ready for driving to a location of a next scheduled appointment stored in his PDA or smartphone, etc.

In particular, the user may simply utter a name of a person associated with an upcoming appointment and, subsequently, the associated location that might be looked-up in an address book or a vCard is automatically selected as the destination for route guidance.

The speech input may alternatively represent some predetermined keyword. After recognition of the keyword uttered by a user the selection of a location stored in the mobile electronic device or a location stored in the vehicle navigation system as the destination for route guidance can be performed.

According to the method all scheduled appointments stored in the scheduler module of the mobile electronic device and associated with locations stored in the mobile electronic device or the vehicle navigation system that are coming up within the predetermined time interval are determined automatically and subsequently all or some of the locations that are associated with the scheduled appointments stored in the scheduler module of the mobile electronic device or the vehicle navigation system that are determined to come up within the predetermined time interval are selected as destinations for route guidance.

Those locations stored in the mobile electronic device and associated with upcoming appointments are fed into the vehicle navigation system and selected as destinations. A list of all destinations might be displayed to the user, whereby he is informed about the entire set of appointments within the predetermined time interval that may, e.g., represent the whole present day.

Again, automatically or on demand by a user in response to a prompt given by the vehicle navigation system (e.g., an acoustic or optical message) the associated locations are selected as the destinations and a route to some or all of the destinations may be calculated. In particular, irrespective of the actual temporal order of the scheduled appointments an optimal route connecting all or some of the destinations is calculated. The optimal route may be, e.g., the shortest or the fastest route. The fastest route might be determined with respect to the category of streets (highways, major streets, etc.) and/or may be determined taking into account the actual traffic situation. After calculation of the optimum route the user is asked whether he wants to be guided the optimum route or a route connecting destinations corresponding to locations associated with appointments in temporal order.

In one embodiment of the inventive method it is estimated whether a selected destination cannot be reached within a predetermined time interval (that may be identical to the above-mentioned predetermined time interval) or until the point of time of the appointment associated with the location that is selected as the destination, and if it is estimated that the selected destination cannot be reached within the predetermined time interval or until the point of time of the appointment associated with the location that is selected as the destination, an event is generated, e.g., a warning is prompted or a message is displayed or announced. The message may offer establishment of a telephone connection to a person associated with the scheduled appointment. The telephone number may, e.g., be looked-up from a vCard of a person associated with the appointment that is stored in the mobile electronic device.

The user is informed about an appointment he cannot keep in due time and he, thus, can take appropriate measures. A typical measure would be to make a telephone call to the person he cannot meet in time. This embodiment of the inventive method efficiently assists the user in dealing with such a situation.

The information, that a meeting cannot be kept in time can be made available immediately after entering the destination or even during the travel on the grounds of real-time traffic information e.g. from traffic announcements or Traffic Message Channel (TMC) messages. The TMC is typically digitally coded using the FM Radio Data System (FM-RDS) on conventional FM radio broadcasts. It can also be transmitted on Digital Audio Broadcasting or satellite radio. Each traffic incident can be sent as a TMC message. One message consists of an event code and a location code in addition to time details.

In order to solve the above-mentioned drawbacks it is also provided a vehicle navigation system configured for route guidance to a destination, according to claim 9.

The inventive vehicle navigation system is particularly useful as a navigation system installed in an automobile.

Herein, it is to be understood that the expression "the control unit is configured to do .." covers the meaning that the control unit causes a separate logical or physical means to do something, e.g., to read data (locations, appointments) from the mobile electronic device.

It is also provided a vehicle navigation system as mentioned above that further comprises a database storing at least one location and wherein the control means is configured to read a location stored in the mobile electronic device or in the database based on the at least one read scheduled appointment and to select the read location as the destination for route guidance.

The control means of the vehicle navigation system is configured to automatically determine whether a scheduled appointment stored in the scheduler module of the mobile electronic device and associated with a location stored in the mobile electronic device or in the database is coming up within a predetermined time interval and to read the associated location, if it is determined that such a scheduled appointment is coming up within the predetermined time interval. The scheduled appointment can, in particular, be associated with a person whose address is stored in the mobile electronic device or in the vehicle navigation system and represents the location that is associated with the scheduled appointment.

The vehicle navigation system further comprises a route calculation means and the control means is configured to automatically read the locations associated with the scheduled appointments and to cause the route calculation means to calculate a route to the destination.

The vehicle navigation system according to the present invention further comprises
an input means, e.g., a speech input or a keyboard or a touch screen,
an output means, e.g., a speech output or a display device, as well as
a route calculation means, and
the control means is configured to instruct the output means to output a prompt to a user and to read the associated location and/or to cause the route calculation means to calculate a route to the destination in response to an input by the user that is input by the input means.

The control means is configured to
automatically determine all scheduled appointments stored in the scheduler module of the mobile electronic device and associated with stored locations that are coming up within the predetermined time interval;
read all or some of the locations associated with the scheduled appointments stored in the scheduler module of the mobile electronic device that are determined to come up within the predetermined time interval; and
select all or some of the read locations as destinations.

In this case the vehicle navigation system further comprises a route calculation means and the control means is configured to automatically read the associated locations and to cause the route calculation means to calculate a route to the destinations.

In particular, the route calculation means is configured to calculate an optimal route, in particular, the shortest or the fastest route, to all or some of the destinations irrespective of the temporal order of the appointments.

According to a further embodiment the control means in one of the above-described examples of the inventive vehicle navigation system is configured to
estimate whether a selected destination cannot be reached within the predetermined time interval or until the point of time of the appointment associated with the location that is selected as the destination; and to
generate an event, in particular a warning or a message offering establishment of a telephone connection to a person associated with the appointment associated with the location that is selected as the destination, if it is estimated that the selected destination cannot be reached within the predetermined time interval or until the point of time of the appointment associated with the location that is selected as the destination.

In this case the control means may also be configured to estimate whether the selected destination cannot be reached within the predetermined time interval or until the point of time of the appointment associated with the location that is selected as the destination on the basis of traffic information, in particular, Traffic Message Channel messages, received by the navigation system.

Additional features and advantages of the present invention will be described with reference to the drawings. In the description, reference is made to the accompanying figures that are meant to illustrate preferred embodiments of the invention. It is understood that such embodiments do not represent the full scope of the invention and are not taken to limit the scope of protection that is exclusively defined by the appended claims.

Figure 1 illustrates an embodiment of the herein disclosed method for entering a destination in a vehicle navigation system comprising the steps of synchronization of an address book and a scheduler module of a PDA with a vehicle navigation system and determining an upcoming appointment from the entries of the scheduler module.

Figure 2 illustrates another embodiment of the herein disclosed method for entering a destination in a vehicle navigation system wherein an address found in the address book of a smartphone is used to select a destination for route guidance.

Figure 3 illustrates an embodiment similar to the one of Figure 3 but considering a case in which an upcoming appointment cannot be kept.

Figure 4 illustrates an embodiment of the herein disclosed method for entering a destination in a vehicle navigation system wherein a number of appointments stored in a PDA are detected by a vehicle navigation system and an optimum route to all of the detected appointments is automatically calculated.

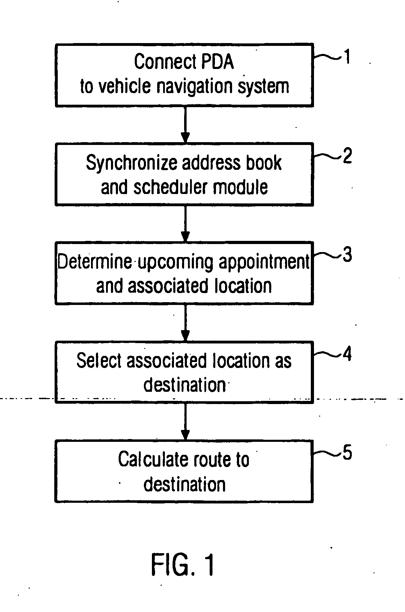

Figure 1 shows basic steps of an embodiment of the method for entering a destination for route guidance in a vehicle navigation system according to the present invention. According to this embodiment a Personal Digital Assistant (PDA) is connected to a vehicle navigation system 1 by a person entering a vehicle and carrying the PDA. The connection can be established wirelessly, e.g., by means of a Bluetooth link, a WLAN link or by an infrared connection.

After connection of the PDA and the vehicle navigation system an address book and a scheduler module comprising scheduled appointments are automatically synchronized with the corresponding database of the navigation system 2. Therefore, the navigation system learns about one or more scheduled appointments that have been entered in the PDA by the user, e.g., the driver of the vehicle in which the vehicle navigation system is installed.

Next, the navigation system checks whether there is some upcoming appointment within a predetermined time interval that is associated with some location 3. The predetermined interval may, e.g., represent the actual day of connection of the PDA to the vehicle navigation system. The user might also be enabled to choose a suitable time interval by manual or verbal input facilitated by a manual or speech input means of the navigation system. According to the present example an appointment is determined that is associated with a location that is stored in the PDA. The location is given by an address including a city name and a street name and street number. The address can be part of the stored appointment entry or may be related to the appointment entry. The appointment entry can, e.g., include a name of a person to be met and the name can be related to an entry in an address book stored in the PDA.

The location associated with the determined upcoming appointment is selected as a destination for route guidance by the vehicle navigation system 4. Geographical data stored in a database of the navigation system is used for localization of the destination. The destination can, thus, be indicated on a digital map shown to the user /driver. The selection of the destination may be performed automatically without interaction with the user. It may be preferred that the user is asked by the navigation system whether the associated location shall be used as a destination for route guidance. The human-machine interaction can, in principle, be performed by means of a display device, a touch screen, push buttons, a speech input/output etc.

Once the location associated with the upcoming appointment is selected as the destination, a route from the present location to the destination, preferably the shortest or fastest route, is calculated 5 by the vehicle navigation system. The route can be indicated on a digital map. Again, the user may be prompted to initiate calculation of the route to the destination or alternatively route calculation is performed without further human-machine interaction. Optical and/or acoustical route guidance can subsequently be performed by the navigation system based on the calculated route to the selected destination.

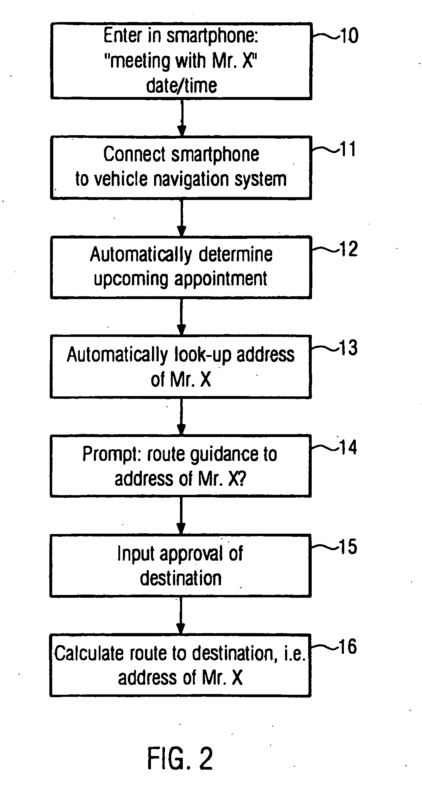

Figure 2 illustrates steps of another embodiment of the inventive method disclosed herein. A user enters 1 the "text meeting with Mr. X" in an appropriate place of an appointment calendar representing date and time, say, August 1, 11 am, of a meeting. The appointment calendar is part of a Personal Information Manager of a smartphone. Assume that the user enters his vehicle equipped with the navigation system of the present invention on August 1 at 9 am. He connects the smartphone to the vehicle navigation system 11. The navigation system automatically reads the appointment calendar and determines the upcoming appointment with Mr. X 12. The navigation system also automatically looks-up the address of Mr. X in an address book 13. The address book may be also stored in the smartphone. It is also considered that the address may be stored in a database of the navigation system.

After having determined the address of Mr. X, the navigation system is, in principle, ready for calculating a route to the address and to perform route guidance. In the present example, the navigation system prompts a message asking the user whether he wants to be guided to the address of Mr. X 14. In some detail, the navigation system may announce a message with the content that an appointment with Mr. X is scheduled for 11 am and may subsequently ask whether or not to perform route guidance to this address. Steps 13 and 14 can be carried out in reversed order.

The navigation system may prompt the message immediately after the appointment is detected or when an estimated time for travel to the location that is associated with the appointment is comparable to the time interval from the present time to the time of the appointment.

The user may approve that he wants to be guided to the address of Mr. X by means of a speech input, a keyboard a touch panel or any other input means known in the art of vehicle navigation systems 15. For example, he may utter a keyword to approve the selected destination for route guidance, i.e., the address of Mr. X.

In an alternative embodiment, the user is prompted to input manually or by speech input the destination after an upcoming appointment is detected in step 12. In any case, after the destination was selected the route to the destination, i.e. the address of Nr. X, is calculated 16 and route guidance to the destination can be started.

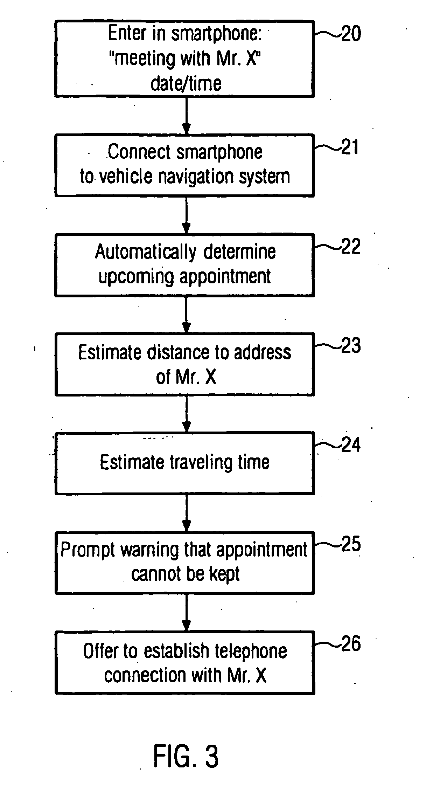

With reference to Figure 3 a case is described in which a detected upcoming appointment cannot be kept, since the traveling time from the present position would be too long to arrive at the location associated with the appointment in time. As in Figure 2 a meeting with Mr. X is entered in the smartphone 20, the smartphone is connected to the vehicle navigation system 21 and an upcoming appointment is automatically determined 22 by the vehicle navigation system after the connection has been established.

The location associated with the appointment, i.e. in the present example the address of Mr. X, is looked-up from an address book or a vCard stored in the smartphone. By means of geographical data stored in a database of the vehicle navigation system the distance from the present location of the vehicle and the address of Mr. X is estimated 23. Based on the estimated distance the traveling time to the address of Mr. X is estimated 24. This estimation may take into account any available traffic information provided, e.g., by some radio station.

Assume that the navigation system determines that the meeting with Mr. X cannot be kept, since the estimated traveling time is too long. In this case, a warning is prompted to the user / driver 25. For example, a synthesized speech output can be provided: "Meeting with Mr. X cannot be kept". Then, establishment of a telephone connection with Mr. X is offered by the vehicle navigation system 26. The corresponding telephone number can be looked up from the address book or vCard stored in the smartphone or in a database of the vehicle navigation system.

If the user agrees, a telephone connection is established. After the telephone conversation with Mr. X the navigation system may offer to delete the mentioned appointment or to postpone it to a later time/date.

The step of estimating the traveling time to the destination 24 can be performed continuously during the travel taken into account the actual traffic by real time traffic information, e.g. from radio traffic announcements or TMC messages. If during the travel the navigation system is informed about a traffic jam on the route to the destination, the system may prompt the warning that the appointment cannot be kept 25.

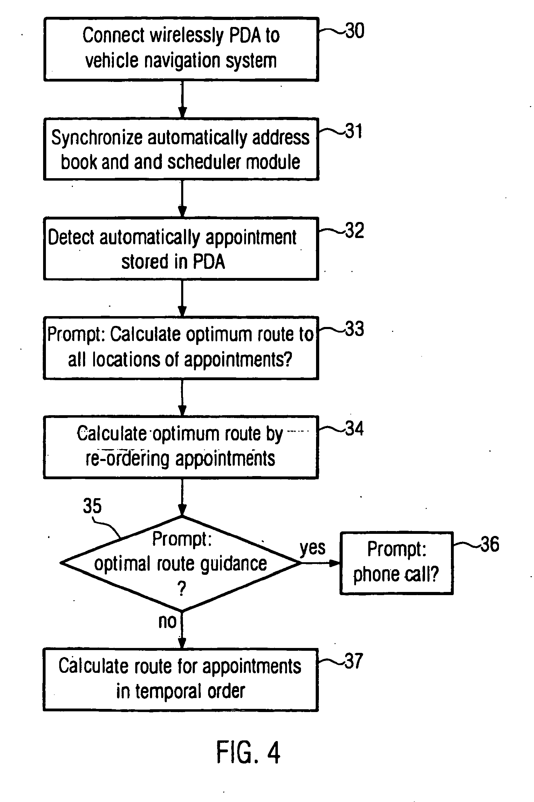

Figure 4 illustrates another aspect of the present invention. A PDA is wirelessly connected to a vehicle navigation system 30. Of course any other mobile electronic device including some kind of a Personal Information Manager can be used in this example (as in the examples above). The connection may be established via a Bluetooth link or a WLAN link, for example. The address book and the scheduler module of the PDA are automatically synchronized 31 with the corresponding database of the navigation system.

By synchronization of the scheduler module the navigation system detects 32 a number of appointments stored in the PDA. The appointments are usually stored and managed in temporal order in scheduler module. Assume that four appointments are stored, in the order 1, 2, 3, and 4, in the PDA for the present day. As in the previous examples the navigation system may automatically or on demand by the user select a location associated with an appointment, preferably, with that appointment that comes up next in time, as the destination for route guidance and may calculate the route to the destination automatically or on demand.

In the present example, the navigation system prompts the user, e.g., a commercial traveler, to acknowledge calculation of an optimum route to all locations associated with the four appointments 33. In response to a positive input by the user the navigation system, i.e. a route calculation means incorporated in the navigation system, calculates 34 an optimum route connecting the locations associated with the four appointments. In particular, each of the appointments may be linked to an address and the address can be related to geographical data stored in a database of the navigation system. The optimum route may be the shortest or fastest route from the present position to all of the locations. Assume that it turns out, however, that for an optimum route the appointments should be kept in some order different from the temporal one stored in the PDA, say, 1, 3, 2, 4. Consequently, calculation of the optimum route includes re-ordering of the appointments 34 in accordance with the optimum route.

Next, the navigation system informs the user about the optimal route, in particular, about the fact that the optimal route differs from a route connecting the locations associated with the appointments in temporal order and prompts the user to decide whether he wants to follow the optimal route or not 35.

If the user wants to be guided along the optimal route the navigation system offers the user to establish a telephone connection to one or more persons involved in appointments that cannot be kept in time when the optimal route is followed 36. This is possible, if the stored appointments are associated with persons whose telephone numbers are found in an address book or a vCard, etc. stored in the PDA or in a database of the navigation system. If, on the other hand, the user prefers to keep the four appointments in temporal order, the navigation system calculates 37 a route including the locations associated with the appointments that are, thus, selected as destinations for route guidance corresponding to the temporal order of the appointments (i.e., 1, 2, 3 and 4).

## Claims

1. Method for entering a destination for route guidance in a vehicle navigation system, comprising
providing a mobile electronic device storing locations and comprising a scheduler module storing scheduled appointments;
connecting the mobile electronic device to the vehicle navigation system; and automatically determining all scheduled appointments stored in the scheduler module of the mobile electronic device and associated with locations stored in the mobile electronic device or the vehicle navigation system that are coming up within the predetermined time interval;
selecting all or some of the locations associated with the scheduled appointments stored in the scheduler module of the mobile electronic device or the vehicle navigation system that are determined to come up within the predetermined time interval as destinations based on the scheduled appointments;
**characterised by**
automatically or on demand by a user in response to a prompt given by the vehicle navigation system calculating the optimal route to at least some of the destinations irrespective of the temporal order of the appointments;
after calculation of the optimal route prompting the user to decide on whether he wants to be guided either
a) the optimal route; or
b) a route connecting destinations corresponding to locations associated with scheduled appointments in temporal order.

2. The method according to claim 1, wherein at least one of the scheduled appointments is associated with a person whose address is stored in the mobile electronic device or in the vehicle navigation system and represents the location that is associated with the scheduled appointment.

3. The method according to one of the preceding claims, further comprising
estimating whether a selected destination cannot be reached within a predetermined time interval or until the point of time of the appointment associated with the location that is selected as the destination; and
generating an event, if it is estimated that the selected destination cannot be reached within the predetermined time interval or until the point of time of the appointment associated with the location that is selected as the destination.

4. The method according to claim 3, wherein the estimating whether the selected destination cannot be reached within the predetermined time interval or until the point of time of the appointment associated with the location that is selected as the destination is based on traffic information, in particular, Traffic Message Channel messages, received by the navigation system.

5. The method according to claim 3 or 4, wherein the generated event is a warning prompted to a user or a message offering establishment of a telephone connection to a person associated with the appointment associated with the location that is selected as the destination that cannot be reached within the predetermined time interval or until the point of time of the appointment.

6. The method according to one of the preceding claims, wherein the mobile electronic device comprises an address book and comprising the step of synchronizing the scheduler module and the address book with the vehicle navigation system.

7. The method according to one of the preceding claims, wherein the mobile electronic device is connected to the vehicle navigation system by wire or wirelessly, in particular, by a Bluetooth link or a WLAN link.

8. The method according to one of the preceding claims, wherein the mobile electronic device is a Personal Digital Assistant or a smartphone or an electronic organizer.

9. Vehicle navigation system configured for route guidance to a destination, comprising
a connection unit configured for connection to a mobile electronic device storing at least one location and comprising a scheduler module storing at least one scheduled appointment;
a database storing at least one location;
a control means configured to
automatically determine all scheduled appointments stored in the scheduler module of the mobile electronic device and associated with stored locations that are coming up within the predetermined time interval;
read all or some of the locations associated with the scheduled appointments stored in the scheduler module of the mobile electronic device that are determined to come up within the predetermined time interval; and
select all or some of the read locations as destinations;
**characterised by**
a route calculation means configured to calculate the optimal route to all or some of the destinations irrespective of the temporal order of the appointments and to calculate a route connecting destinations corresponding to locations associated with scheduled appointments in temporal order;
an input means;
an output means configured to output a prompt;
and wherein
the control means is configured to instruct the output means to
output a prompt to a user and to read the associated location and to cause the route calculation means to calculate the optimal route to the destination in response to an input by the user that is input by the input means; and
output a prompt to the user to decide on whether he wants to be guided either
a) the optimal route; or
b) the route connecting destinations corresponding to locations associated with scheduled appointments in temporal order.

10. The vehicle navigation system according to claim 9, wherein the control means is configured to
estimate whether a selected destination cannot be reached within a predetermined time interval or until the point of time of the appointment associated with the location that is selected as the destination; and to
generate an event, in particular a warning or a message offering establishment of a telephone connection to a person associated with the appointment associated with the location that is selected as the destination, if it is estimated that the selected destination cannot be reached within the predetermined time interval or until the point of time of the appointment associated with the location that is selected as the destination.

11. The vehicle navigation system according to claim 10, wherein the control means is configured to estimate whether the selected destination cannot be reached within the predetermined time interval or until the point of time of the appointment associated with the location that is selected as the destination on the basis of traffic information, in particular, Traffic Message Channel messages, received by the navigation system.

## Patentansprüche

1. Verfahren zum Eingeben eines Ziels zur Routenführung in ein Fahrzeugnavigationssystem, umfassend
Bereitstellen einer mobilen elektronischen Einrichtung, die Orte speichert und ein Planermodul umfasst, das geplante Verabredungen speichert;
Verbinden der mobilen elektronischen Einrichtung mit dem Fahrzeugnavigationssystem; und
automatisches Bestimmen sämtlicher geplanter Verabredungen, die in dem Planermodul der mobilen elektronischen Einrichtung gespeichert und mit Orten assoziiert sind, die in der mobilen elektronischen Einrichtung oder in dem Fahrzeugnavigationssystem gespeichert sind und die innerhalb eines vorbestimmten Zeitintervalls fällig werden;
auf der Grundlage der geplanten Verabredungen Auswählen sämtlicher oder einiger der Orte, die mit den geplanten Verabredungen, die in dem Planermodul der mobilen elektronischen Einrichtung oder in dem Fahrzeugnavigationssystem gespeichert sind, assoziiert sind, und von denen bestimmt wird, dass sie innerhalb des vorbestimmten Zeitintervalls fällig werden, als Ziele;
**gekennzeichnet durch**
automatisches oder auf einen Befehl eines Nutzers in Reaktion auf eine Eingabeanforderung, die von dem Fahrzeugnavigationssystem ausgegeben wird, erfolgendes Berechnen der optimalen Route zu zumindest einigen der Ziele ohne Berücksichtigung der zeitlichen Reihenfolge der Verabredungen;
Auffordern des Nutzers nach der Berechnung der optimalen Route, darüber zu entscheiden, ob er entweder
a) die optimale Route; oder
b) eine Route, die Ziele entsprechend Orten verbindet, die mit geplanten Verabredungen in zeitlicher Reihenfolge assoziiert sind,
geführt werden will.

2. Das Verfahren gemäß Anspruch 1, in dem zumindest eine der geplanten Verabredungen mit einer Person assoziiert ist, deren Adresse in der mobilen elektronischen Einrichtung oder in dem Fahrzeugnavigationssystem gespeichert ist und den Ort darstellt, der mit der geplanten Verabredung assoziiert ist.

3. Das Verfahren gemäß einem der vorhergehenden Ansprüche, das weiterhin umfasst
Abschätzen, ob ein ausgewähltes Ziel innerhalb eines vorbestimmten Zeitintervalls oder bis zu dem Zeitpunkt der Verabredung, die mit dem Ort assoziiert ist, der als das Ziel ausgewählt worden ist, nicht erreicht werden kann; und
Erzeugen eines Ereignisses, wenn abgeschätzt wird, dass das ausgewählte Ziel nicht innerhalb des vorbestimmten Zeitintervalls oder bis zu dem Zeitpunkt der Verabredung, die mit dem Ort assoziiert ist, der als das Ziel ausgewählt worden ist, erreicht werden kann.

4. Das Verfahren gemäß Anspruch 3, in dem das Abschätzen, ob das ausgewählte Ziel innerhalb des vorbestimmten Zeitintervalls oder bis zu dem Zeitpunkt der Verabredung, die mit dem Ort assoziiert ist, der als Ziel ausgewählt worden ist, nicht erreicht werden kann, auf der Grundlage von Verkehrsinformationen, insbesondere Nachrichten von einem Verkehrsnachrichtenkanal, die von dem Fahrzeugnavigationssystem empfangen werden.

5. Das Verfahren gemäß Anspruch 3 oder 4, in dem das erzeugte Ereignis eine Warnung, die an eine Nutzer ausgegeben wird, oder eine Nachricht ist, die den Aufbau einer Telefonverbindung mit einer Person anbietet, die mit der Verabredung, die mit dem Ort assoziiert ist, der als Ziel ausgewählt worden ist, der nicht innerhalb des vorbestimmten Zeitintervalls oder bis zu dem Zeitpunkt der Verabredung erreicht werden kann, assoziiert ist.

6. Das Verfahren gemäß einem der vorhergehenden Ansprüche, in dem die mobile elektronische Einrichtung ein Adressbuch umfasst und den Schritt des Synchronisierens des Planermoduls und des Adressbuchs mit dem Fahrzeugnavigationssystem umfassend.

7. Das Verfahren gemäß einem der vorhergehenden Ansprüche, in dem die mobile elektronische Einrichtung über Draht oder Funk, insbesondere eine Bluetooth-Verbindung oder eine WLAN-Verbindung, mit dem Fahrzeugnavigationssystem verbunden ist.

8. Das Verfahren gemäß einem der vorhergehenden Ansprüche, in dem die mobile elektronische Einrichtung ein Personal Digital Assistant oder ein Smartphone oder ein elektronischer Organizer ist.

9. Fahrzeugnavigationssystem, das zur Routenführung zu einem Ziel ausgebildet ist, umfassend
eine Verbindungseinheit, die für eine Verbindung mit einer mobilen elektronischen Einrichtung, die zumindest einen Ort speichert und ein Planermodul umfasst, das zumindest eine geplante Verabredung speichert, ausgebildet ist;
eine Datenbank, die zumindest einen Ort speichert;
eine Steuereinrichtung, die dazu ausgebildet ist,
automatisch sämtliche geplante Verabredungen zu bestimmen, die in dem Planermodul der mobilen elektronischen Einrichtung gespeichert und mit den gespeicherten Orten assoziiert sind, die innerhalb eines vorbestimmten Zeitintervalls fällig werden;
Auslesen sämtlicher oder einiger der Orte, die mit den geplanten Verabredungen assoziiert sind, die in dem Planermodul der mobilen elektronischen Einrichtung gespeichert sind und von denen bestimmt wird, dass sie innerhalb des vorbestimmten Zeitintervalls fällig werden;
Auswählen sämtlicher oder einiger der ausgelesenen Orte als Ziele;
**gekennzeichnet durch**
eine Routenberechnungseinrichtung, die dazu ausgebildet ist, die optimale Route zu sämtlichen oder einigen der Ziele ohne Berücksichtigung der zeitlichen Reihenfolge der Verabredungen zu berechnen und eine Route zu berechnen, die Ziele entsprechend Orten verbindet, die mit den geplanten Verabredungen in zeitlicher Reihenfolge assoziiert sind;
eine Eingabeeinrichtung;
eine Ausgabeeinrichtung, die dazu ausgebildet ist, eine Anforderung auszugeben;
und in der
die Steuereinrichtung dazu ausgebildet ist, die Ausgabeeinrichtung dazu anzuweisen
eine Anforderung an einen Nutzer auszugeben und den assoziierten Ort auszulesen und die Routenberechnungseinrichtung dazu zu veranlassen, die optimale Route zu dem Ziel in Reaktion auf eine Eingabe **durch** den Nutzer, die über die Eingabeeinrichtung eingegeben wird, zu berechnen; und
eine Aufforderung an den Nutzer, zu entscheiden, ob er entweder
a) die optimale Route; oder
b) eine Route, die Ziele entsprechend Orten verbindet, die mit geplanten Verabredungen in zeitlicher Reihenfolge assoziiert sind,
geführt werden will, auszugeben.

10. Das Fahrzeugnavigationssystem gemäß Anspruch 9, in dem die Steuereinrichtung dazu ausgebildet ist,
abzuschätzen, ob ein ausgewähltes Ziel innerhalb eines vorbestimmten Zeitintervalls oder bis zu dem Zeitpunkt der Verabredung, die mit dem Ort assoziiert ist, der als das Ziel ausgewählt worden ist, nicht erreicht werden kann; und
ein Ereignis, insbesondere eine Warnung oder eine Nachricht, die den Aufbau einer Telefonverbindung mit einer Person anbietet, die mit der Verabredung, die mit dem Ort assoziiert ist, der als Ziel ausgewählt worden ist, assoziiert ist, zu erzeugen, wenn abgeschätzt wird, dass das ausgewählte Ziel nicht innerhalb des vorbestimmten Zeitintervalls oder bis zu dem Zeitpunkt der Verabredung, die mit dem Ort assoziiert ist, der als das Ziel ausgewählt worden ist, erreicht werden kann.

11. Das Fahrzeugnavigationssystem gemäß Anspruch 10, in dem die Steuereinrichtung dazu ausgebildet ist, auf der Grundlage von Verkehrsinformationen, insbesondere Nachrichten von einem Verkehrsnachrichtenkanal, die von dem Fahrzeugnavigationssystem empfangen werden, abzuschätzen, ob das ausgewählte Ziel innerhalb des vorbestimmten Zeitintervalls oder bis zu dem Zeitpunkt der Verabredung, die mit dem Ort assoziiert ist, der als Ziel ausgewählt worden ist, nicht erreicht werden kann.

## Revendications

1. Procédé d'introduction d'une destination de guidage routier dans un système de navigation pour véhicule, comprenant
la mise à disposition d'un dispositif électronique mobile stockant des emplacements et comprenant un module d'ordonnancement qui enregistre des rendez-vous planifiés ;
la connexion du dispositif électronique mobile au système de navigation pour véhicule ; et
la détermination automatique de tous les rendez-vous planifiés stockés dans le module d'ordonnancement du dispositif électronique mobile et associés à des emplacements stockés dans le dispositif électronique mobile ou dans le système de navigation pour véhicule qui apparaissent dans l'intervalle de temps prédéterminé ;
la sélection, en tout ou en partie, des emplacements associés aux rendez-vous planifiés stockés dans le module d'ordonnancement du dispositif électronique mobile ou dans le système de navigation pour véhicule et qui sont déterminés pour apparaître dans l'intervalle de temps prédéterminé comme destinations, sur la base des rendez-vous planifiés ;
**caractérisé par**
de manière automatique ou sur demande d'un utilisateur, en réponse à une invite fournie par le système de navigation pour véhicule, le calcul de l'itinéraire optimal à au moins une partie des destinations, indépendamment de l'ordre chronologique des rendez-vous ;
une fois l'itinéraire optimal calculé, l'envoi d'une invite à l'utilisateur pour décider s'il veut être guidé selon soit
a) l'itinéraire optimal ; soit
b) un itinéraire reliant des destinations correspondant à des emplacements associés à des rendez-vous planifiés en ordre chronologique.

2. Procédé selon la revendication 1, dans lequel au moins un des rendez-vous planifiés est associé à une personne dont l'adresse est stockée dans le dispositif électronique mobile ou dans le système de navigation pour véhicule et représente l'emplacement associé au rendez-vous planifié.

3. Procédé selon l'une des revendications précédentes, comprenant en outre
l'estimation du fait qu'une destination sélectionnée peut être atteinte ou non dans un intervalle de temps prédéterminé ou avant le moment fixé du rendez-vous associé à l'emplacement sélectionné comme destination ; et
la génération d'un événement, s'il est estimé que la destination sélectionnée ne peut pas être atteinte dans l'intervalle de temps prédéterminé ou avant le moment fixé du rendez-vous associé à l'emplacement sélectionné comme destination.

4. Procédé selon la revendication 3, dans lequel l'estimation du fait que la destination sélectionnée peut être atteinte ou non dans l'intervalle de temps prédéterminé ou avant le moment fixé du rendez-vous associé à l'emplacement sélectionné comme destination est basée sur des informations de trafic, et en particulier sur des messages TMC, soit Traffic Message Channel, reçus par le système de navigation.

5. Procédé selon la revendication 3 ou 4, dans lequel l'événement généré est un avertissement envoyé comme invite à l'utilisateur ou un message offrant l'établissement d'une connexion téléphonique avec une personne associée au rendez-vous associé à l'emplacement sélectionné comme la destination qui ne peut pas être atteinte dans l'intervalle de temps prédéterminé ou avant le moment fixé du rendez-vous.

6. Procédé selon l'une des revendications précédentes, dans lequel le dispositif électronique mobile comporte un carnet d'adresses et comprenant l'étape consistant à synchroniser le module d'ordonnancement et le carnet d'adresses avec le système de navigation pour véhicule.

7. Procédé selon l'une des revendications précédentes, dans lequel le dispositif électronique mobile est connecté au système de navigation pour véhicule par fil ou sans fil, en particulier par une liaison Bluetooth ou WLAN.

8. Procédé selon l'une des revendications précédentes, dans lequel le dispositif électronique mobile est soit un assistant numérique personnel ou PDA - Personal Digital Assistant, soit un téléphone intelligent ou smartphone, soit un agenda électronique.

9. Système de navigation pour véhicule configuré pour le guidage routier vers une destination, comprenant
une unité de connexion configurée pour la connexion à un dispositif électronique mobile stockant au moins un emplacement et comprenant un module d'ordonnancement stockant au moins un rendez-vous planifié ;
une base de données stockant au moins un emplacement ;
un moyen de contrôle configuré pour
déterminer automatiquement tous les rendez-vous planifiés stockés dans le module d'ordonnancement du dispositif électronique mobile et associés à des emplacements stockés qui apparaissent dans l'intervalle de temps prédéterminé ;
lire, en tout ou en partie, les emplacements associés aux rendez-vous planifiés stockés dans le module d'ordonnancement du dispositif électronique mobile, qui sont déterminés pour apparaître dans l'intervalle de temps prédéterminé ; et
sélectionner, en tout ou en partie, les emplacements lus comme destinations ;
**caractérisé par**
un moyen de calcul d'itinéraire configuré pour calculer l'itinéraire optimal aux destinations en tout ou en partie, indépendamment de l'ordre chronologique des rendez-vous, et pour calculer un itinéraire reliant des destinations correspondant aux emplacements associés aux rendez-vous planifiés en ordre chronologique ;
un moyen d'introduction ;
un moyen de sortie configuré pour sortir une invite ;
et dans lequel
le moyen de contrôle est configuré pour commander le moyen de sortie de façon à
sortir une invite pour un utilisateur, à lire l'emplacement associé et à faire exécuter, par le moyen de calcul d'itinéraire, le calcul de l'itinéraire optimal vers la destination en réponse à une entrée de l'utilisateur introduite par le moyen d'introduction ; et
sortir une invite pour l'utilisateur de manière à ce qu'il décide s'il veut ou non être guidé selon soit
a) l'itinéraire optimal ; soit
b) l'itinéraire connectant des destinations correspondant aux emplacements associés aux rendez-vous planifiés en ordre chronologique.

10. Système de navigation pour véhicule selon la revendication 9, dans lequel le moyen de contrôle est configuré pour
estimer si une destination sélectionnée peut ou non être atteinte dans un intervalle de temps prédéterminé ou avant le moment fixé du rendez-vous associé à l'emplacement sélectionné comme destination ; et pour
générer un événement, en particulier un avertissement ou un message proposant l'établissement d'une liaison téléphonique avec une personne associée au rendez-vous associé à l'emplacement sélectionné comme destination, s'il est estimé que la destination sélectionnée ne peut pas être atteinte dans l'intervalle de temps prédéterminé ou avant le moment fixé du rendez-vous associé à l'emplacement sélectionné comme destination.

11. Système de navigation pour véhicule selon la revendication 10, dans lequel le moyen de contrôle est configuré pour estimer si la destination sélectionnée peut ou non être atteinte dans l'intervalle de temps prédéterminé ou avant le moment fixé du rendez-vous associé à l'emplacement sélectionné comme destination sur la base d'informations de trafic, et en particulier sur des messages TMC reçus par le système de navigation.
